# EUROPÄISCHE PATENTSCHRIFT

(11) **EP 4 088 984 B1**
(45) Veröffentlichungstag und Bekanntmachung des Hinweises auf die Patenterteilung: **11.03.2026**
(21) Anmeldenummer: 21173507.1
(22) Anmeldetag: 12.05.2021
(51) Int. Cl.: B61L 15/00, B61L 27/00, H04L 7/00, B61L 27/70, H04L 27/26

(54) **SYMMETRISCHES DATENÜBERTRAGUNGSVERFAHREN UND VORRICHTUNGEN ZU DESSEN DURCHFÜHRUNG**
SYMMETRICAL DATA TRANSMISSION METHOD AND DEVICES FOR CARRYING OUT THE METHOD
PROCÉDÉ SYMÉTRIQUE DE TRANSMISSION DE DONNÉES ET DISPOSITIFS DESTINÉ À SA MISE EN OEVRE

(43) Veröffentlichungstag der Anmeldung: 16.11.2022
(73) Patentinhaber: Siemens Mobility GmbH, 80997 München (DE)
(72) Erfinder: Berold, Ulrich, 90427 Nürnberg (DE); Jäger, Alexander, 38122 Braunschweig (DE); Döppmann, Ralph, 38162 Cremlingen OT Abbenrode (DE); Hain, Stefan, 91090 Effeltrich (DE); Ludwig, Klaus, 91058 Erlangen (DE); Lüssenhop, Thomas, 38108 Braunschweig (DE); Stallmann, Thorsten, 38304 Wolfenbüttel (DE)
(74) Vertreter: Siemens Patent Attorneys

(56) Entgegenhaltungen:
- EP-A1- 1 855 413
- US-A1- 2004 117 076
- US-A1- 2008 247 367

## Beschreibung

Die Erfindung betrifft ein in unabhängigem Anspruch 1 definiertes Datenübertragungsverfahren, bei dem zwischen einem ersten Transceiver und einem zweiten Transceiver kabelgebunden eine Datenübertragung in beiden Richtungen mit einer Datenrate in derselben Größenordnung erfolgt. Außerdem betrifft die Erfindung ein Modem, aufweisend einen Transceiver mit einer ersten Schnittstelle zur Datenübertragung und einen Computer, der über eine zweite Schnittstelle mit dem Transceiver verbunden ist. Weiterhin betrifft die Erfindung eine Bahnanlage, aufweisend ein erste Teilanlage mit einem ersten Modem und eine zweite Teilanlage mit einem zweiten Modem, wobei das erste Modem und das zweite Modem über eine erste Schnittstelle miteinander verbunden sind. Zuletzt betrifft die Erfindung ein Computerprogrammprodukt sowie eine Bereitstellungsvorrichtung für dieses Computerprogrammprodukt, wobei das Computerprogrammprodukt mit Programmbefehlen zur Durchführung dieses Verfahrens ausgestattet ist.

In der Bahntechnik gibt es Anwendungen, bei denen eine Signalübertragung zwischen Bahnkomponenten in beiden Richtungen erforderlich ist. Beispielsweise kann eine Signalübertragung zwischen einer Innenanlage in einem Stellwerk und einer Außenanlage, repräsentiert beispielsweise durch ein Lichtsignal oder eine Balise, notwendig werden. Zu diesem Zweck werden die Bahnkomponenten mit Leitungen verbunden.

Weit verbreitet ist die Signalübertragung in ISDN-Technologie. Hierbei handelt es sich allerdings um eine veraltete Technologie, weswegen es absehbar ist, dass die zur Umsetzung erforderlichen Hardwarekomponenten immer schwerer verfügbar sein werden. Für Anwendungen der Signalübertragung wie beispielsweise der Bahntechnik besteht daher ein Bedarf, alternative Übertragungstechnologien zur Verfügung zu haben.

Dokument EP 1 855 413 A1 beschreibt ein Verfahren zum Bereitstellen von Rahmen und das Bereitstellen vordefinierter Bitlängen in jedem Rahmen für die Übertragung von Daten von einem Sender zu einem Empfänger bzw. umgekehrt. Jeder Rahmen umfasst einen Zeitschlitz, während dessen keine Informationen vom Sender zum Empfänger und umgekehrt übertragen werden und der Impuls vom Sender zum Empfänger übertragen wird.

Dokument US 2008/247367 A1 beschreibt Ausführungsformen von Systemen und Verfahren für die Koexistenz von Bluetooth und WiMAX. Eine einem Rahmen zugeordnete zeitliche Referenz wird bestimmt und dann ein anderer drahtloser Rahmen mit dieser zeitlichen Referenz ausgerichtet.

Dokument US 2004/117076 A1 beschreibt ein System zur Fernsteuerung einer oder mehrerer Lokomotiven. Das System umfasst eine Fernsteuereinheit, in die ein menschlicher Bediener Befehle eingibt, und eine in der Lokomotive montierte Lokomotivensteuerung. Die Fernsteuereinheit kommuniziert mit der Lokomotivensteuerung über eine Hochfrequenz (HF) -Kommunikationsverbindung.

Die Aufgabe der Erfindung besteht darin, ein Datenübertragungsverfahren bzw. eine Vorrichtung zur Durchführung dieses Datenübertragungsverfahrens für Signale in beide Richtungen anzugeben, welches eine hohe Zuverlässigkeit bei der Übertragung gewährleistet und insbesondere auch für sicherheitskritische Anwendungen wie bahntechnische Anwendungen einsetzbar ist. Außerdem besteht die Aufgabe der Erfindung darin, ein Computerprogrammprodukt sowie eine Bereitstellungsvorrichtung für dieses Computerprogrammprodukt anzugeben, mit dem das vorgenannte Verfahren durchgeführt werden kann.

Diese Aufgabe wird mit dem eingangs angegebenen Anspruchsgegenstand (Datenübertragungsverfahren) erfindungsgemäß laut den Merkmalen von Anspruch 1 dadurch gelöst, dass
- zur Übertragung von die Daten repräsentierenden Signalen in den beiden Richtungen ein Time Division Duplex Verfahren eingesetzt wird, bei dem dem ersten Transceiver und dem zweiten Transceiver jeweils Zeitschlitze zum Senden und Zeitschlitze zum Empfangen der Signale zugewiesen werden,
- die Zuweisung der Zeitschlitze für den ersten Transceiver und den zweiten Transceiver derart synchronisiert wird, dass immer jeweils ein Zeitschlitz zum Senden und ein Zeitschlitz zum Empfangen synchron verlaufen,
- zur Modulation der Signale ein OFDM-Verfahren genutzt wird,
bei dem alle zur Verfügung stehenden Trägerfrequenzen sowohl für die eine Richtung als auch für die andere Richtung der Übertragung genutzt werden, wobei jedem Zeitschlitz für jede verwendete Trägerfrequenz eine Modulationsvorschrift zugeordnet wird.

Für die Übertragung der Signale in beiden Richtungen (Duplexbetrieb) wird ein Time Division Duplexverfahren, kurz TDD-Verfahren verwendet. Bei einem solchen Verfahren werden zum Senden und Empfangen der Daten jeweils definierte Zeitschlitze für den Betrieb des Transceivers vorgesehen, so dass dieser immer entweder nur sendet oder nur empfängt. Unterschieden wird zwischen Zeitschlitzen zum Senden von Signalen und Zeitschlitzen zum Empfangen von Signalen. Ist allgemein nur von Zeitschlitzen die Rede, so gelten die mit der Erwähnung verbundenen Aussagen jeweils sowohl für Zeitschlitze zum Senden als auch für Zeitschlitze zum Empfangen gleichermaßen.

Um die Übertragungsqualität in der oben genannten Weise zu sichern ist erfindungsgemäß vorgesehen, dass jedem Zeitschlitz für jede verwendete Trägerfrequenz eine Modulationsvorschrift zugeordnet wird und diese Modulationsvorschrift in mittels ebenfalls übertragenen Steuersignalen neu festgelegt werden können, wenn die Modulationsvorschrift für die betreffende Trägerfrequenz geändert werden soll. Dies ermöglicht es nämlich, gezielt bei jeder verwendeten Trägerfrequenz auf einer Verschlechterung der Übertragungsqualität reagieren zu können, wobei Änderungen durch eine Modifikation der Modulationsvorschrift vorgenommen werden.

Jedem für die Übertragung verwendeten Kanal ist eine Trägerfrequenz zugeordnet. Die Trägerfrequenz ist mit einer Modulationsvorschrift verknüpft. Auf diese Weise entsteht ein Array von den Trägerfrequenzen zugeordneten Modulationsvorschriften, welche im Zusammenhang mit dieser Erfindung auch als Modulationstabelle bezeichnet werden soll. Teil der Modulationsvorschrift ist auch eine zu übertragende Datenrate für die zu übertragenen Signale, wobei die Höhe der Datenrate eine Reserve für Übertragungsverluste (zum Beispiel durch auftretende Übertragungsfehler) in der betreffenden Trägerfrequenz beeinflusst.

Als OFDM-Verfahren (Orthogonal Frequency-Division Multiplexing, deutsch Orthogonales Frequenzmultiplexverfahren) ist gemäß der Erfindung eine Implementierung einer Multicarrier-Modulation zu verstehen. Es handelt sich um ein Modulationsverfahren, welches mehrere orthogonale Träger zur digitalen Datenübertragung verwendet (d. h. das Maximum eines Trägers liegt bei seinen Nachbarträgern jeweils auf einem Nulldurchgang, wodurch eine Beeinflussung der Signale untereinander reduziert wird, die benachbarten Trägern aufmoduliert sind).

Die zu übertragenden Nutzsignale werden zunächst auf mehrere Teildatenströme mit niedriger Datenrate aufgeteilt. Diese Teildatenströme werden jeder für sich mit einem herkömmlichen Modulationsverfahren wie der Quadraturamplitudenmodulation mit geringer Bandbreite moduliert und anschließend die modulierten HF-Signale gemeinsam übertragen. Um die einzelnen Signale bei der Demodulation im Empfänger unterscheiden zu können, ist es notwendig, dass die Träger im Funktionenraum orthogonal stehen. Das bewirkt, dass die Teildatenströme sich möglichst wenig gegenseitig beeinflussen.

Die eingangs bereits beschriebene OFDM-Übertragungstechnologie wird üblicherweise für die Übertragung von Daten mit vergleichsweise hoher Übertragungsrate, beispielsweise in Wireless LAN Netzen verwendet. Die hierbei erreichbare Übertragungssicherheit wäre allerdings für bahntechnische Anwendungen nicht ausreichend. Hiermit ist der erfindungsgemäße Ansatzpunkt zu begründen, nur die Modulation der Daten in der OFDM-Technologie durchzuführen, jedoch, wie aus dem ISDN-Verfahren bekannt, ein TDD-Verfahren zu wählen, um eine Kommunikation in beiden Richtungen zu gewährleisten. Dadurch wird es möglich, alle zur Verfügung stehenden Trägerfrequenzen sowohl für die eine Richtung als auch für die andere Richtung der Übertragung zu nutzen. Die Nutzung kann daher mit Blick auf eine möglichst hohe Übertragungsqualität und nicht mit Blick auf eine Festlegung darauf, ob die Trägerfrequenz für einen Upload oder für einen Download bestimmt ist, ausgewählt werden.

Die Anwendung eines TDD-Verfahrens wird darüber hinaus dadurch begünstigt, dass eine Datenübertragung in beiden Richtungen mit einer Datenrate in derselben Größenordnung erfolgt. Hiermit ist gemeint, dass die Datenübertragungsraten für die eine Richtung und für die andere Richtung im zeitlichen Mittel nicht weiter als um den Faktor 10 auseinanderliegen, vorzugsweise nicht weiter als um den Faktor 2 auseinanderliegen. In der Konzeption der Datenübertragung in die eine und in die andere Richtung ist das Datenübertragungsverfahren insofern als symmetrisch zu bezeichnen.

Beispielsweise bei Bahnanwendungen sind die Applikationen, die Daten austauschen, nämlich hinsichtlich des Bedarfs an auszutauschenden Daten weitgehend gleichwertig. Dies bedeutet aber auch, dass vorteilhaft die zur Verfügung stehenden Reserven zur Eliminierung von Übertragungsfehlern zur Verbesserung der Übertragungsqualität auf beide Übertragungsrichtungen gleichmäßig aufgeteilt werden kann. Dies macht das Übertragungsverfahren erfindungsgemäß in beiden Richtungen gleich sicher (hierzu folgende noch mehr).

Als "Nutzsignale" im Sinne der Erfindung sind diejenigen Signale zu verstehen, für die das Datenübertragungsverfahren durchgeführt wird, die also ausgetauscht werden sollen. Mit anderen Worten handelt es sich um Signale, die zum Betrieb von Applikationen erforderlich sind, die unter Zuhilfenahme des Datenübertragungsverfahrens miteinander kommunizieren.

Demgegenüber sind "Steuersignale" diejenigen Signale, die benötigt werden, um das Datenübertragungsverfahren durchzuführen. Insbesondere ist es notwendig, Steuersignale für die Änderung von Modulationsvorschriften auszutauschen, damit der erste Transceiver und der zweite Transfer dauerhaft miteinander kommunizieren können. Auch ist es erforderlich, die Kommunikation zwischen dem ersten Transceiver und dem zweiten Transceiver zu synchronisieren. Zu diesem Zweck können in regelmäßigen Abständen Synchronisationssignale versendet werden, welche ebenfalls die Eigenschaft von Steuersignalen haben.

Unter "rechnergestützt" oder "computerimplementiert" kann im Zusammenhang mit der Erfindung eine Implementierung des Verfahrens verstanden werden, bei dem mindestens ein Computer mindestens einen Verfahrensschritt des Verfahrens ausführt.

Der Ausdruck "Computer" deckt alle elektronischen Geräte mit Datenverarbeitungseigenschaften ab. Computer können beispielsweise Personal Computer, Server, Handheld-Computer, Mobilfunkgeräte und andere Kommunikationsgeräte, Prozessoren und andere elektronische Geräte zur Datenverarbeitung sein, die vorzugsweise auch zu einem Netzwerk zusammengeschlossen sein können.

Unter einem "Prozessor" kann im Zusammenhang mit der Erfindung beispielsweise ein Wandler, ein Sensor zur Erzeugung von Messsignalen oder eine elektronische Schaltung verstanden werden. Bei einem Prozessor kann es sich insbesondere um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen, etc. handeln. Auch kann unter einem Prozessor ein virtualisierter Prozessor oder eine Soft-CPU verstanden werden.

Unter einer "Speichereinheit" kann im Zusammenhang mit der Erfindung beispielsweise ein computerlesbarer Speicher in Form eines Arbeitsspeichers (engl. Random-Access Memory, RAM) oder Datenspeichers (Festplatte oder Datenträger) verstanden werden.

Als "Schnittstellen" können hardwaretechnisch, beispielsweise kabelgebunden oder als Funkverbindung, oder softwaretechnisch, beispielweise als Interaktion zwischen einzelnen Programmmodulen eines oder mehrerer Computerprogramme, realisiert sein.

Als "Programmmodule" sollen einzelne Funktionsabläufe verstanden werden, die einen erfindungsgemäßen Programmablauf von rechnergestützten Verfahrensschritten ermöglichen. Diese Funktionsabläufe können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Gemäß einer Ausgestaltung der Erfindung ist vorgesehen, dass zur Synchronisation in einem Synchronisationsvorgang ein Synchronisationssignal von dem ersten Transceiver oder dem zweiten Transceiver zum jeweils anderen Transceiver übertragen wird.

Eine Synchronisation ist erforderlich, damit die Zeitschlitze zum Senden und zum Empfangen jeweils komplementär deckungsgleich zur Verfügung stehen. Dies bedeutet, dass ein Zeitschlitze zum Senden im ersten Transceiver synchron mit einem Zeitschlitze zum empfangen im zweiten Transceiver liegt und umgekehrt.

Eine Synchronisation durch Senden eines Synchronisationssignals durchzuführen, hat den Vorteil, dass eine Drift bei der Zeitmessung im ersten Transceiver und im zweiten Transceiver ausgeglichen werden kann. Dies ermöglicht insbesondere die Verwenden COTS-Komponenten (commercial-off-the-shelf), was Kostenvorteile mit sich bringt.

Gemäß einer Ausgestaltung der Erfindung ist vorgesehen, dass mehrere Zeitschlitze zwischen aufeinanderfolgenden Synchronisationsvorgängen liegen, wobei die aufeinanderfolgenden Synchronisationsvorgänge einen Rahmen bilden.

Beispielsweise können 8 Zeitschlitze in einem Rahmen liegen. Es sind natürlich auch andere Rahmengrößen denkbar. Der Synchronisationsvorgang benötigt selbst auch eine gewisse Zeit. Dadurch, dass mehrere Zeitschlitze zwischen den Synchronisationsvorgängen zusammengefasst werden, steigt somit die für einen Austausch von Nutzsignalen zur Verfügung stehende Übertragungskapazität.

Die Zahl der Zeitschlitze, die zwischen zwei aufeinanderfolgenden Synchronisationsvorgängen liegen können, hängt von der Genauigkeit der zum Einsatz kommenden Uhren ab. Dabei muss sichergestellt sein, dass eine Zeitdrift zwischen aufeinanderfolgenden Synchronisationsvorgängen das Übertragungsverfahren hinsichtlich einer sicheren Übertragung der Signale nicht gefährdet.

Gemäß einer Ausgestaltung der Erfindung ist vorgesehen, dass das Synchronisationssignal zur Bestimmung der Signallaufzeit zwischen dem ersten Transceiver und dem zweiten Transceiver verwendet wird.

Das Synchronisationssignal kann vorteilhaft dazu verwendet werden, um eine noch nicht bekannte Signallaufzeit in der Verbindung zwischen dem ersten Transceiver dem zweiten Transceiver ermitteln. Dies kann beispielsweise derart erfolgen, dass das Signal beispielsweise vom ersten Transceiver zum zweiten über gesendet wird und anschließend wieder vom zweiten Transceiver zum ersten Transceiver. Der Zeitversatz zwischen dem Senden des Synchronisationssignals und dem Empfang des Synchronisationssignals durch den ersten Transceiver ermöglicht die Ermittlung der Signallaufzeit (hierzu im Folgenden noch mehr) .

Gemäß einer Ausgestaltung der Erfindung ist vorgesehen, dass bei dem Synchronisationsvorgang nach dem Senden und Empfangen des Synchronisationssignals ein Karenzzeitraum durchlaufen wird, bevor jeweils der nächste Sendezeitschlitz und Empfangszeitschlitz im ersten Transceiver und im zweiten Transceiver erreicht werden.

Die Berücksichtigung eines Karenzzeitraums bewirkt vorteilhaft, dass das Synchronisationssignal nach der Übertragung abklingen kann, bevor ein Nutzsignal im darauffolgenden Zeitschlitz gesendet und empfangen wird. Dadurch ist eine ungestörte Übertragung möglich und es wird eine durch das Synchronisationssignal bedingte Erhöhung der Korrekturrate vermieden.

Gemäß einer Ausgestaltung der Erfindung ist vorgesehen, dass für das Senden und das Empfangen der Signale im ersten Transceiver und im zweiten Transceiver derselbe Trägerfrequenzbereich genutzt wird.

Der Vorteil einer Nutzung desselben Trägerfrequenzbereiches für beide Richtungen ist bereits erläutert worden. Der Trägerfrequenzbereich kann durch die Anwendung des TDD-Verfahrens nämlich sowohl für das Senden als auch für das Empfangen der Signale verwendet werden. Dies bedeutet, dass Trägerfrequenzen, die den Trägerfrequenzbereich definieren, allein mit Blick auf die Übertragungsqualität ausgewählt werden kann. Der Vorteil liegt darin, dass die Übertragungsqualität auf diese Weise für die eine Senderichtung wie auch für die andere Senderichtung gleich hoch ist.

Die Möglichkeit einer Auswahl von geeigneten Trägerfrequenzen, d. h. Trägerfrequenzen, bei denen eine gute Übertragungsqualität vorliegt, setzt voraus, dass mehr Trägerfrequenzen für eine Übertragung zur Verfügung stehen, als die zu übertragenden Datenraten erfordern. Mit anderen Worten kann eine Reserve für ein Modifizieren des Übertragungsverfahrens auch in der Verfügbarkeit von nicht belegten Trägerfrequenzen bestehen, die im Bedarfsfall vorzugsweise gleichermaßen für beide Übertragungsrichtungen ausgewählt werden können.

Gemäß einer Ausgestaltung der Erfindung ist vorgesehen, dass im ersten Transceiver und zweiten Transceiver eingegangene Signale abhängig von der übertragungsbedingten Dämpfung des Signals verstärkt werden.

Diese Ausgestaltung der Erfindung berücksichtigt den Umstand, dass die Transceiver für den Empfang der Signale einen Dynamikbereich aufweisen, in dem der Empfänger optimal ausgesteuert ist. Allerdings soll das Übertragungsverfahren mit derselben Hardware bei Übertragungsleitungen unterschiedlicher Leitungslänge zum Einsatz kommen können. Die Dämpfung der Übertragung steigt jedoch mit der Leiterlänge, dass die Transceiver hinsichtlich des Dynamikbereiches für unterschiedliche Übertragung strecken nicht gleichermaßen gut ausgesteuert werden können.

Dieser Problematik kann durch eine Verstärkung der Signale begegnet werden. Die Verstärkung wird dann im Einsatzfall derart angepasst, dass das von dem Transceiver empfangene Signal optimal ausgesteuert ist. Bei einer größeren bei der Übertragung auftretenden Dämpfung ist eine größere Verstärkung notwendig und umgekehrt bei einer geringeren auftretenden Dämpfung eine geringere Verstärkung. Üblicherweise nimmt die Dämpfung bei der Übertragung bei größeren Übertragungsstrecken zu.

Gemäß einer Ausgestaltung der Erfindung ist vorgesehen, dass das Maß der Verstärkung bei einer Initialisierung des Datenübertragungsverfahrens festgelegt wird.

Eine Initialisierung des Datenübertragungsverfahrens findet statt, wenn das Datenübertragungsverfahren gestartet wird. Zu diesem Zeitpunkt kann die Dämpfung der Übertragungsstrecke überprüft werden, um von vornherein optimierte Übertragungsbedingungen dahingehend zu schaffen, dass eine Verstärkung der Signale optimal eingestellt wird. Eine Initialisierung ist insbesondere bei einer Erstinbetriebnahme erforderlich. Aber auch bei einer Wiederinbetriebnahme, beispielsweise, nachdem das Datenübertragungsverfahren nach einer Betriebspause wieder gestartet wird, ist sinnvoll, weil sich in der Zwischenzeit Übertragungsbedingungen, insbesondere die Dämpfung der Übertragung, geändert haben kann.

Die genannte Aufgabe wird alternativ mit dem eingangs angegebenen Anspruchsgegenstand (Modem) erfindungsgemäß auch dadurch gelöst, dass das Modem eingerichtet ist, ein Verfahren zur Datenübertragung gemäß einem der voranstehenden Ansprüche durchzuführen.

Die genannte Aufgabe wird außerdem alternativ mit dem eingangs angegebenen Anspruchsgegenstand (Bahnanlage) erfindungsgemäß auch dadurch gelöst, dass das erste Modem (M1) und das zweite Modem (M2) jeweils gemäß dem vorstehenden Anspruch ausgeführt sind.

Mit den Vorrichtungen lassen sich die Vorteile erreichen, die im Zusammenhang mit dem obenstehend näher beschriebenen Verfahren bereits erläutert wurden. Das zum erfindungsgemäßen Verfahren Aufgeführte gilt entsprechend auch für die erfindungsgemäßen Vorrichtungen.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogrammprodukts beansprucht.

Die Bereitstellungsvorrichtung ist beispielsweise ein Speichereinheit, die das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes, beispielsweise cloudbasiertes Computersystem und/oder virtuelles Rechnersystem, welches das Computerprogrammprodukt vorzugsweise in Form eines Datenstroms speichert und/oder bereitstellt.

Die Bereitstellung erfolgt in Form eines Programmdatenblocks als Datei, insbesondere als Downloaddatei, oder als Datenstrom, insbesondere als Downloaddatenstrom, des Computerprogrammprodukts. Diese Bereitstellung kann beispielsweise aber auch als partieller Download erfolgen, der aus mehreren Teilen besteht. Ein solches Computerprogrammprodukt wird beispielsweise unter Verwendung der Bereitstellungsvorrichtung in ein System eingelesen, sodass das erfindungsgemäße Verfahren auf einem Computer zur Ausführung gebracht wird.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch durch mit den vorstehend beschriebenen Merkmalen der Erfindung kombinierbar.

Es zeigen:
Figur 1 ein Ausführungsbeispiel der erfindungsbemäßen Vorrichtungen (Modem und Bahnanlage) mit ihren Wirkzusammenhängen schematisch,
Figur 2 die Signalamplitude s in Abhängigkeit von der Zeit t in einem Diagramm, in dem exemplarisch ein Rahmen mit 8 Zeitschlitzen zur Übertragung von Signalen dargestellt ist,
Figur 3 ein Ausführungsbeispiel des erfindungsgemäßen Verfahrens zur Übertragung von Signalen in einem Rahmen gemäß Figur 2 als Flussdiagramm, wobei die einzelnen Verfahrensschritte einzeln oder in Gruppen durch Programmmodule verwirklicht sein können und wobei die Funktionseinheiten und Schnittstellen gemäß Figur 1 beispielhaft angedeutet sind,
Figur 4 ein Ausführungsbeispiel des erfindungsgemäßen Verfahrens mit den Programmmodulen einer direkten Kanalschätzung und einer indirekten Kanalschätzung, wobei das Verfahren gemäß Figur 3 in das Verfahren gemäß Figur 4 mehrmals eingebettet ist.

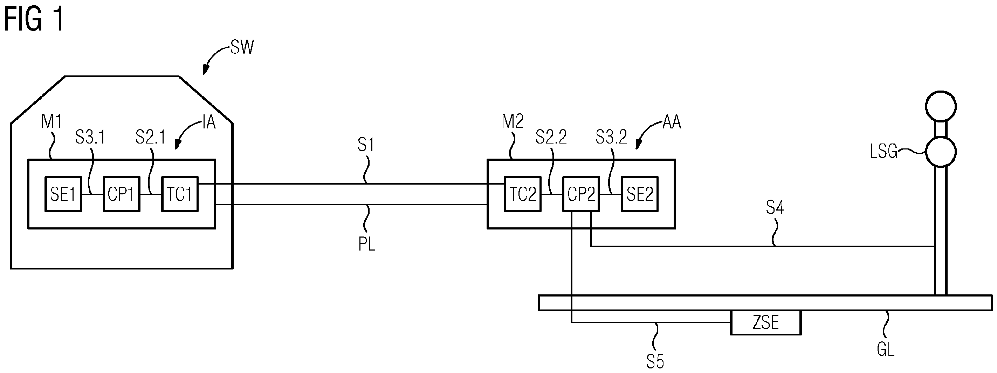

In Figur 1 ist schematisch eine Bahnanlage dargestellt. Diese wird repräsentiert durch ein Stellwerk SW und ein Gleis GL. Am Gleis GL kommt weiterhin ein Lichtsignal LSG und eine Zugsicherungseinrichtung ZSE zum Einsatz. Bei der Zugsicherungseinrichtung ZSE kann es sich beispielsweise um eine Balise handeln. Die Darstellung ist stark vereinfacht. Die Bahnanlage könnte über die dargestellten Funktionselemente hinaus noch weitere Funktionselemente enthalten, die aufgrund eines gemeinsamen Funktionszusammenhangs die Bahnanlage definieren.

Die abgebildeten Elemente können jedoch dazu dienen, um die Funktionsweise einer Signalübertragung entsprechend der Erfindung zu erläutern. Die Signalübertragung erfolgt über eine kabelgebundene erste Schnittstelle S1. Sie verbindet eine erste Teilanlage der Bahnanlage, die in Figur 1 als Innenanlage IA im Stellwerk SW installiert ist, mit einer zweiten Teilanlage der Bahnanlage, die in Figur 1 als Außenanlage AA am Gleis GL, beispielsweise in einem nicht näher dargestellten Schaltkasten, installiert ist.

In der Innenanlage IA kommt ein erstes Modem M1 und in der Außenanlage AA ein zweites Modem M2 zwecks Übertragung von Signalen über die erste Schnittstelle S1 zum Einsatz. Das erste Modem M1 weist einen ersten Transceiver TC1, einen ersten Computer CP1 und eine erste Speichereinrichtung SE1 auf. Der Computer CP1 ist über eine zweite Schnittstelle S2.1 mit dem Transceiver TC1 und über eine dritte Schnittstelle S3.1 mit der ersten Speichereinrichtung SE1 verbunden.

Das zweite Modem M2 ist entsprechend aufgebaut. Ein zweiter Computer CP2 ist über eine weitere zweite Schnittstelle S2.2 mit einem zweiten Transceiver TC2 und über eine weitere dritte Schnittstelle S3.2 mit einer zweiten Speichereinrichtung SE2 verbunden. Der erste Transceiver TC1 und der zweite Transceiver TC2 kommunizieren über die besagte erste Schnittstelle S1 miteinander, wobei diese kabelgebundene Schnittstelle zur Überbrückung größerer Distanzen von beispielsweise bis zu 20 km ausgelegt ist. Neben einer Übertragung von Signalen über die erste Schnittstelle S1 ist außerdem eine Stromleitung PL zwischen dem ersten Modem M1 in der Innenanlage IA und dem zweiten Modem M2 in der Außenanlage AA vorgesehen, welche das zweite Modem M2 mit Energie versorgt.

Das erste Modem M1 ist dazu eingerichtet, Stellbefehle aus dem Stellwerk SW an die Außenanlage AA zu übermitteln. Diese ist dazu eingerichtet, über eine vierte Schnittstelle S4 die Stellbefehle an das Lichtsignal LSG zu übermitteln und über eine fünfte Schnittstelle S5 an die Zugsicherungseinrichtung ZSE zu übermitteln. In umgekehrter Richtung können Rückmeldesignale der Zugsicherungseinrichtung ZSE oder des Lichtsignals LSG in gleicher Weise über die erste Schnittstelle S1 an das Stellwerk SW übermittelt werden.

Wie erwähnt, ist die Bahnanlage gemäß Figur 1 stark vereinfacht dargestellt. Insbesondere können zur Ansteuerung des Lichtsignals LSG oder der Zugsicherungseinrichtung ZSE in der Außenanlage AA sowie zur Generierung von Stellbefehlen in der Innenanlage IA weitere, nicht dargestellte Computer zum Einsatz kommen.

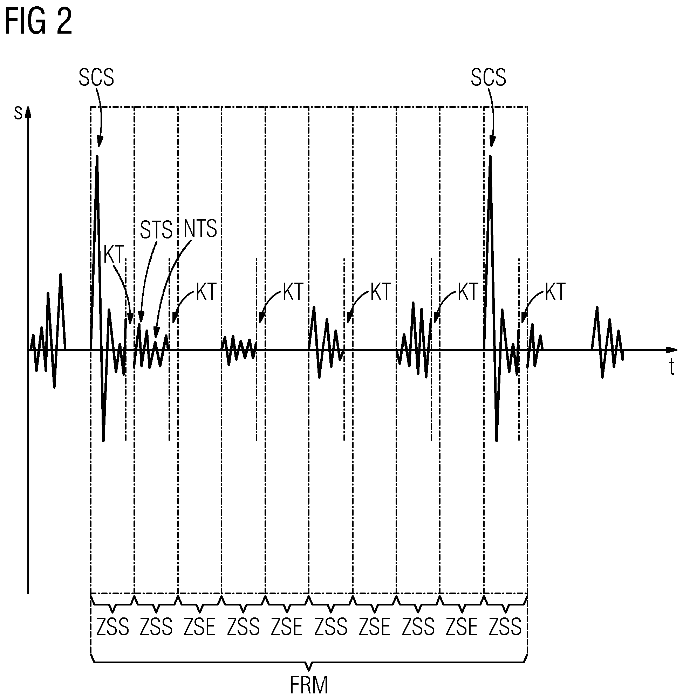

In Figur 2 ist der Signalverlauf des Sendesignals s über die Zeit t eines der beiden Transceiver dargestellt. Im Rahmen des Ausführungsbeispiels wird davon ausgegangen, dass dies der erste Transceiver TC1 ist. Der Signalverlauf soll anhand eines Rahmens FRM erläutert werden, wobei sich Figur 2 entnehmen lässt, dass dieser Rahmen FRM einen Ausschnitt des zeitlichen Verlaufs des Signals s darstellt und auf diese Weise eine nicht dargestellte Aneinanderreihung von Rahmen entsteht.

Wie in Figur 2 dargestellt, wird der Rahmen durch Synchronisationssignale SCS begrenzt (und ist durch diese definiert), die in regelmäßigen Zeitabständen durch den ersten Transceiver TC1 gesendet werden. Sowohl für das Senden des Synchronisationssignals SCS als auch für das Senden von Nutzsignalen NTS sowie Steuersignalen STS, stehen in dem Rahmen FRM Zeitschlitze ZSS zum Senden zur Verfügung. In diesen lässt sich, wie in Figur 2 angedeutet, ein Sendesignal über die erste Schnittstelle S1 versenden. Dies ist durch einen Signalverlauf in Form von Schwingungen (Ausschlägen in der Signalamplitude) in Figur 2 angedeutet. Weiterhin gibt es Zeitschlitze ZSE zum Empfangen, in denen der erste Transceiver TC1 nicht sendet, sondern empfängt. Das empfangene Signal ist in Figur 2 nicht dargestellt. Das Sendesignal ist in den Zeitschlitzen zum Empfangen ZSE nicht vorhanden, da dieses nicht übertragen werden kann (bedingt durch das Funktionsprinzip des Time-Division-Duplex-Verfahrens).

Weiterhin ist in Figur 2 zu erkennen, dass ein Rahmen FRM jeweils vier Zeitschlitze zum Senden ZSS und vier Zeitschlitze zum Empfangen ZSE zur Verfügung stellt. Hinzu kommt der Zeitschlitz zum Senden ZSS, in dem das Synchronisationssignal SCS übertragen wird. Die übrigen Zeitschlitze stehen zur Übertragung eines Nutzsignals NTS und/oder eines Steuersignals STS zur Verfügung, wie dies in Figur 2 ebenfalls angedeutet ist. Als Nutzsignale sollen Signale verstanden werden, die Informationen bezüglich der laufenden Applikation der Bahnanlage betreffen. Hierbei kann es sich beispielsweise um die Steuerung eines Lichtsignals handeln. Als Steuersignale STS sollen Signale verstanden werden, die für den Betrieb des erfindungsgemäßen Übertragungsverfahrens notwendig sind. Hierbei kann es sich beispielsweise um Anpassungen im Verfahrensablauf des Übertragungsverfahrens handeln, die erforderlich werden, um die Übertragungsqualität auf Dauer sicherzustellen (hierzu im Folgenden noch mehr).

Zu bemerken ist, dass die Zeitschlitze zum Empfangen ZSE ebenfalls sowohl empfangene Nutzsignale NTS als auch empfangene Steuersignale STS enthalten können, auch wenn dies in Figur 2 nicht dargestellt ist. Ein Rahmen FRM des zweiten Transceivers TC2 würde ähnlich aussehen wie der des ersten Transceivers TC1; nur, dass die Zeitschlitze zum Senden ZSS und die Zeitschlitze zum Empfangen ZSE zumindest derjenigen Zeitschlitze, die Nutzsignale NTS und Steuersignale STS übertragen, komplementär zu den in Figur 2 dargestellten angeordnet sein würden. So ist sichergestellt, dass der zweite Transceiver TC2 empfängt, während der erste Transceiver TC1 sendet und umgekehrt.

Für den Empfang des Synchronisationssignals SCS durch den Zeitschlitz zum Senden ZSS des ersten Transceivers TC1 (in Figur 2 dargestellt) liegt zeitgleich im zweiten Transceiver TC2 ein Zeitschlitz zum Empfangen ZSE (nicht dargestellt). Bei bekannter Signallaufzeit in dem durch die erste Schnittstelle S1 realisierten Kabel kann durch Empfang des Synchronisationssignals SCS im zweiten Transceiver TC2 eine Synchronisation des Verfahrens vorgenommen werden, indem eine Drift von Uhren zur Synchronisation der Zeitfenster ggf. korrigiert wird.

Das Synchronisationssignal SCS kann in nicht dargestellter Weise aber auch dazu verwendet werden, die Signallaufzeit in dem die erste Schnittstelle S1 bildenden Kabel zu ermitteln. Zu diesem Zweck wird das Synchronisationssignal SCS, gesendet durch den ersten Transceiver TC1, durch den zweiten Transceiver TC2 nach Empfang wieder zurückgesendet und durch den ersten Transceiver TC1 wieder empfangen. Ist die Reaktionszeit des zweiten Transceivers TC2 bekannt, so kann die Signallaufzeit ermittelt werden durch die Differenz zwischen dem Empfangszeitpunkt und dem Sendezeitpunkt des Synchronisationssignals SCS durch den ersten Transceiver TC1, wobei von dieser Differenz die Reaktionszeit des zweiten Transceivers TC2 abgezogen wird und dieses Ergebnis durch 2 geteilt wird. Selbstverständlich können die Rollen der Transceiver TC1, TC2 bei dem Laufzeitmessverfahren vertauscht sein.

Weiterhin sind in Figur 1 Karenzzeiten KT dargestellt. Diese werden im Zeitschlitz zum Senden ZSS des Synchronisationssignals SCS vorgesehen, damit das Synchronisationssignal ausklingen kann und die Übertragung von Steuersignalen STS und Nutzsignalen NTS in darauffolgenden Zeitschlitzen zum Senden ZSS nicht beeinflusst. Auch in den Zeitschlitzen zum Senden und/oder in den Zeitschlitzen zum Empfangen (letzteres in Figur 2 nicht dargestellt) können Karenzzeiten KT vorgesehen werden, die die Signallaufzeiten berücksichtigen. Auf diese Weise wird sichergestellt, dass ausgesendete Signale STS, NTS auch unter Berücksichtigung ihrer Laufzeit in dem zur Verfügung stehenden Zeitfenster zum Empfangen ZSE vollständig empfangen werden können. Deswegen endet die Übertragung der Signale in dem Zeitfenster zum Senden ZSS, um den Betrag der Karenzzeit KT verfrüht vor dem tatsächlichen Ende des Zeitfensters zum Senden ZSS.

In Figur 2 ist weiterhin dargestellt, dass die in den Zeitfenstern zum Senden ZSS gesendeten Signale nicht notwendigerweise immer Steuersignale STS und Nutzsignale NTS enthalten müssen. Steuersignale STS müssen nur übertragen werden, wenn Änderungen an dem in Durchführung befindlichen Übertragungsverfahren erfolgen sollen. Nutzsignale NTS müssen nur übertragen werden, wenn zwischen der Innenanlage IA und der Außenanlage AA eine Kommunikation erforderlich ist. Demgegenüber werden Synchronisationssignale SCS jedes Mal übertragen, wenn ein Wechsel von einem Rahmen FRM zum darauffolgenden Rahmen erfolgt.

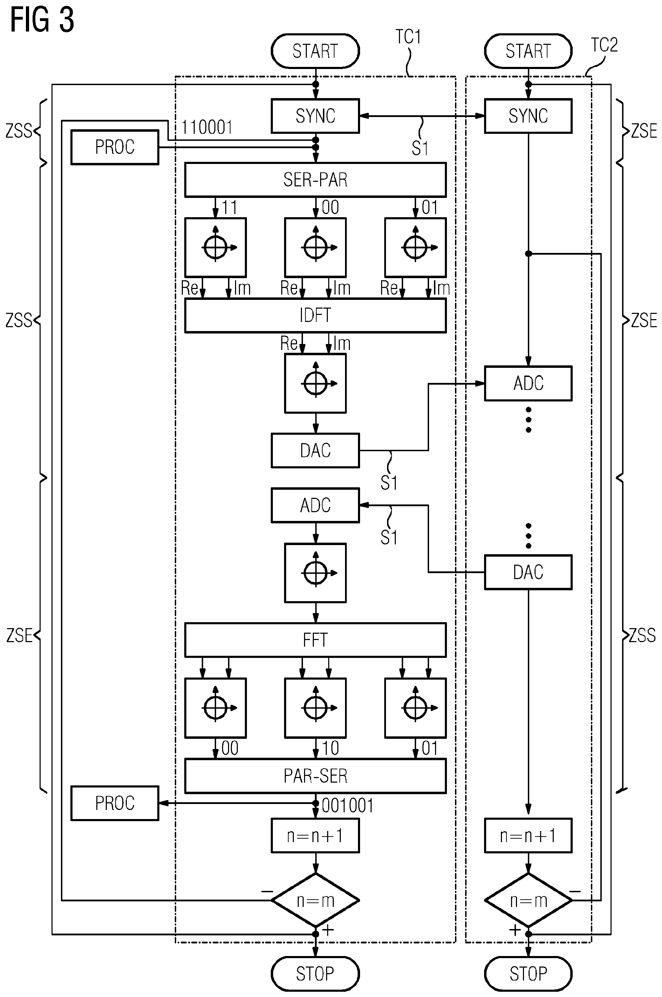

In Figur 3 ist in einem Ablaufdiagramm dargestellt, wie der Verfahrensablauf innerhalb eines Rahmens FRM gemäß Figur 2 in dem ersten Transceiver TC1 ausgestaltet sein kann. Außerdem ist auch der zweite Transceiver TC2 angedeutet, wobei der Verfahrensablauf hier vereinfacht dargestellt wurde.

Nach dem Start am Beginn des Rahmens FRM (vgl. Figur 2) erfolgt zunächst ein Synchronisationsschritt SYNC, bei dem über die erste Schnittstelle S1 ein Synchronisationssignal zwischen dem ersten Transceiver TC1 und dem zweiten Transceiver TC2 gesendet oder ausgetauscht wird (wie vorstehend bereits beschrieben). Dies erfolgt im ersten in Figur 2 dargestellten Zeitschlitz zum Senden ZSS, während zeitgleich im zweiten Transceiver TC2 ein Zeitschlitz ZSE zur Verfügung steht.

Im nächsten Schritt wird aus einem Prozessschritt PROC der Bahnanwendung ein generiertes Signal abgerufen, welches vereinfacht gemäß Figur 3 die Bitfolge 110001 aufweist. Dieses Signal soll nun mithilfe des OFDM-Verfahrens versendet werden. In einem nachfolgenden Aufteilungsschritt für das Signal SER-PAR wird die Bitfolge nun exemplarisch auf drei Trägerfrequenzen (Kanäle) verteilt. Dabei ergeben sich, wie angedeutet, die Teilsignale 11, 00 und 01. Diese Teilsignale werden jetzt auf mehrere orthogonale Trägerfrequenzen verteilt, was durch die Aufspaltung in einen Realanteil RE und einen Imaginäranteil IM symbolisiert wird.

Das so entstandene OFDM-Signal wird in einem nächsten Schritt einer inversen diskreten Fourier-Transformation IDFT unterworfen, sodass anschließend ein einzelnes Signal mit Realanteil RE und Imaginäranteil IM einem Schritt der Digital-Analog-Wandlung DAC unterworfen werden kann. Das so gewonnene analoge Signal wird über die erste Schnittstelle S1 an den zweiten Transceiver TC2 übertragen. Zu diesem Zweck befinden sich, wie in Figur 3 angedeutet, der erste Transceiver TC1 in einem Zeitschlitz zum Senden ZSS und der zweite Transceiver TC2 in einem Zeitschlitz zum Empfangen ZSE.

In dem zweiten Transceiver TC2 erfolgt in einem nächsten Schritt eine Analog-Digital-Wandlung ADC und nachfolgend eine Empfangsprozedur, die analog zu der Empfangsprozedur abläuft, die nachfolgend noch für den Transceiver TC1 beschrieben wird.

Im zweiten Transceiver TC2 folgt ein Zeitschlitz zum Senden ZSS, der zeitgleich mit einem Zeitschlitz zum Empfangen ZSE im Transceiver TC1 liegt. Ein neues Signal aus einem nicht dargestellten Prozess, welcher die Bitfolge 001001 aufweist, wird in nicht näher dargestellter Weise durch eine Sendeprozedur einem OFDM-Verfahren unterworfen, welches analog zu dem vorstehend für ersten Transceiver TC1 beschriebenen abläuft, und mit einem Schritt zur Digital-Analog-Wandlung DAC endet.

Anschließend wird das Signal über die erste Schnittstelle S1 an den ersten Transceiver TC1 übertragen, wo die Empfangsprozedur beginnt. Diese startet mit einem Schritt zur Analog-Digital-Wandlung ADC und einem anschließenden Schritt einer Fourier-Transformation FFT des digitalisierten Signals. Hierdurch wird dieses auf die Trägerfrequenzen aufgeteilt, angedeutet durch die jeweiligen Realanteile RE und Imaginäranteile IM, sodass die Teilsignale 00, 10 und 01 zur Verfügung stehen. In einem nachfolgenden Zusammenführungsschritt für das Signal PAR-SER wird das Nutzsignal 001001 zusammengefügt und kann in einen weiteren Prozessschritt PROC der Bahnanwendung einfließen.

Anschließend wird eine Zähl-Variable n um 1 erhöht in einem Schritt n=n+1 und nachfolgend in einem Abfrageschritt für das Erreichen des Rahmenendes geprüft, ob die Zählvariable n die Zahl der Zeitfenster m für einen Rahmen bereits erreicht hat (Abfrageschritt n=m). Ist dies der Fall, ist die Übertragung in dem betreffenden Rahmen beendet (Verfahrensschritt STOP). Ist dies nicht der Fall, so wird das Übertragen für zwei weitere Zeitschlitze, einem Zeitschlitz zum Senden ZSS und einem Zeitschlitz zum Empfangen ZSE in den Transceivern TC1 und TC2 wiederholt.

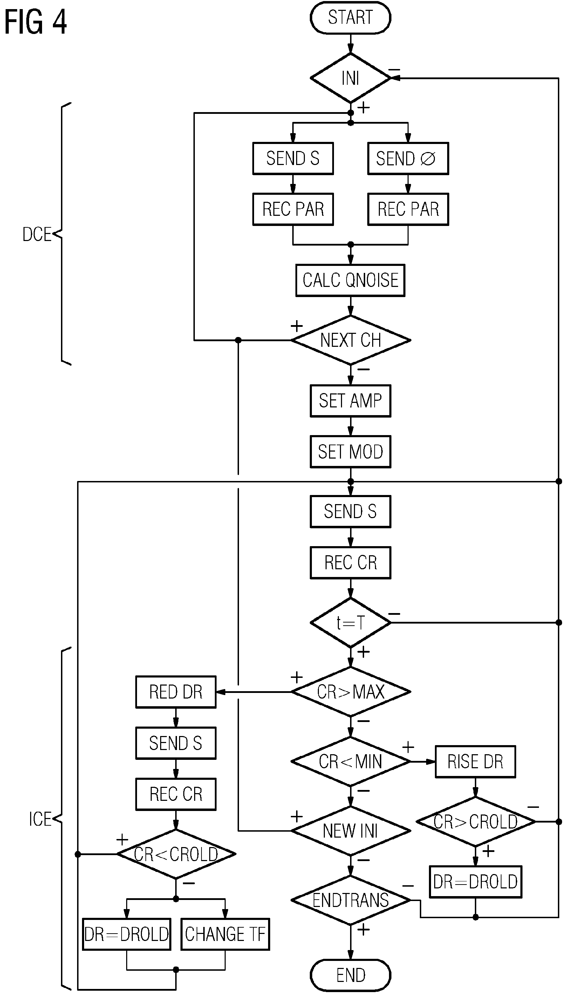

Der Figur 4 kann entnommen werden, wie das in Figur 3 beschriebene Verfahren, welches die Vorgehensweise zwischen zwei Synchronisationssignalen beschreibt, in ein Übertragungsverfahren eingebettet sein kann, wobei in diesem Verfahren zur Verbesserung bzw. Erhaltung der Übertragungsqualität sowohl ein direktes Kanalschätzungsverfahren DCE als auch ein indirektes Kanalschätzungsverfahren ICE in unterschiedlichen Verfahrensstadien zum Einsatz kommt. Das Verfahren gemäß Figur 3 wird in Figur 4 durch die Sendeschritte SEND S und Send 0 repräsentiert, wobei diese Sendeschritte für einen Zeitschlitz zum Senden ZSS oder mehrere Zeitschlitze zum Senden ZSS vorzugsweise den zu einem Rahmen FRM gehörenden Zeitschlitzen zum Senden stehen können.

Wird die Verbindung mit den beiden Transceivern, also dem ersten Transceiver und dem zweiten Transceiver, (nicht dargestellt) begonnen (Verfahrensschritt START), erfolgt zunächst ein Abfrageschritt, ob eine Initialisierung des Verfahrens durchgeführt werden soll. Dies ist insbesondere bei einer Erstinbetriebnahme erforderlich, bei der der erste Transceiver und der zweite Transceiver noch mit einer Modulationstabelle, enthaltend jeweils Modulationsvorschriften für verschiedene Trägerfrequenzen, default-mäßig ausgestattet sind. Damit ist eine Kommunikation zwischen dem ersten Transceiver und dem zweiten Transceiver zwar möglich, jedoch der größten Wahrscheinlichkeit nach nicht unter den optimalen Übertragungsbedingungen.

Zu diesem Zweck wird ein Kanalschätzungsverfahren durchgeführt. Dieses wird als direkte Kanalschätzung DCE bezeichnet, weil hierbei an sich bekannte Kanalschätzungsverfahren zum Einsatz kommen können, aber auch das nachfolgend beschriebene. Gemäß Figur 4 ist zur Kanalschätzung vorgesehen, dass bei einem Sendeschritt für ein Signal SEND S in einem Zeitschlitz ZSS auf einer gewählten Sendefrequenz, auch als Kanal bezeichnet, ein das Signal S gesendet wird. In einem weiteren Zeitschlitz ZSS wird ein Sendeschritt ohne Signal SEND 0 durchgeführt, bei dem eine Übertragung stattfindet, jedoch der betreffenden Trägerfrequenz kein Signal aufmoduliert wird. Bei beiden vorgenannten Sendeschritten wird in einem Aufzeichnungsschritt für einen Empfangsparameter REC PAR als Empfangsparameter gemäß Figur 4 die Signalamplitude s aufgezeichnet. Hierbei ist zu bemerken, dass auch in dem Fall des Sendeschritts ohne Signal SEND 0 ein Signal empfangen wird, welches ein Rauschen bei der Signalübertragung abbildet. Daher kann in einem nachfolgenden Bestimmungsschritt CALC QNOISE das Signal-Rauschverhältnis für eine Übertragung auf dem betreffenden Kanal bestimmt werden.

In einem nachfolgenden Abfrageschritt NEXT CH wird geprüft, ob noch ein weiterer Kanal vorhanden ist. Ist dies der Fall, wird auch für diesen Kanal, also diese Trägerfrequenz das direkte Kanalschätzungsverfahren DCE durchgeführt.

Sind alle verfügbaren Kanäle geprüft und ist deren Signalrauschverhältnis somit bekannt, kann zur Verbesserung der Übertragungsqualität ein Einstellschritt für eine Signalverstärkung SET AMP durchgeführt werden, damit das im ersten Transceiver oder zweiten Transceiver empfangene Signal hinsichtlich der Signalamplitude optimal ausgesteuert ist. Außerdem kann, nachdem die Übertragungsqualität für alle Kanäle geschätzt wurde, in einem Einstellschritt für die Modulation SET MOD die Modulationstabelle aktualisiert werden. Diese Aktualisierung erfolgt mit dem Ziel, jene Kanäle zu bevorzugen, deren Übertragungsqualität vergleichsweise gut ist. Außerdem kann die Übertragungsrate derart angepasst werden, dass diese bei Kanälen mit einer besseren Übertragungsqualität höher sind als bei Kanälen mit einer schlechteren Übertragungsqualität. Diese Modifikationen setzen voraus, dass das insgesamt nominell zur Verfügung stehende Übertragungsvolumen des betreffenden Übertragungsverfahren nicht ausgeschöpft wird. Dies ist insbesondere bei Anwendungen in der Bahntechnik gegeben, da die (vorzugsweise kabelgebundene) Datenverbindung vorrangig zur Übertragung von Meldungen und Steuerbefehlen verwendet wird, die ein geringes Datenvolumen benötigen.

Mit der aktualisierten Modulationstabelle können nun Sendeschritte SEND S durchgeführt werden, bei denen Nutzsignale NTS (vgl. Figur 2) übertragen werden, um einen Prozess PROC (vgl. Figur 3) zu unterstützen. Zwecks Überwachung des Übertragungsverfahrens wird hierbei in regelmäßigen Abständen, vorzugsweise für jeden Rahmen oder für eine festgelegte Anzahl von Zeitschlitzen oder über einen festgelegten Zeitraum, in einem Aufzeichnungsschritt REC CR die Korrekturrate aufgezeichnet, welche sich bei der Übertragung der Signale jeweils ergibt. Eine Korrektur der übertragenen Daten kann in an sich bekannter Weise durch die Ermittlung von Bitfehlern bei kodierten Signalen erfolgen. Die Aufzeichnung der Korrekturrate erfolgt gemäß Figur 4 konkret über einen festgelegten Zeitraum T, wobei in einem Abfrageschritt t=T überprüft wird, ob das Ende des festgelegten Zeitraums erreicht wurde (alternativ, nicht dargestellt können auch die überwachten Zeitschlitze gezählt und mit einer festgelegten Anzahl für die Zeitschlitze verglichen werden).

Sobald dies der Fall ist, wird das indirekte Kanalschätzungsverfahren ICE in Gang gesetzt. Als indirekt wird dieses Kanalschätzungsverfahren deswegen bezeichnet, weil bei der Kanalschätzung kein Empfangsparameter zugrunde gelegt wird, der einen direkten Rückschluss auf die Übertragungsqualität zulässt. Vielmehr wird die Korrekturrate für übertragene Daten herangezogen, aus der sich Rückschlüsse für eine Übertragungsqualität nur indirekt ziehen lassen. Deshalb ist das nachfolgend beschriebene Verfahren zur indirekten Kanalschätzung ICE davon abhängig, dass Änderungsmaßnahmen am Übertragungsverfahren daraufhin geprüft werden, ob diese überhaupt zu einer Verbesserung der Fehlerrate - und indirekt damit der Übertragungsqualität - beitragen.

Zu diesem Zweck wird in einem Abfrageschritt CR>MAX geprüft, ob die Korrekturrate größer als ein oberer Grenzwert MAX ist. Wenn dies der Fall ist, wird in einem Reduktionsschritt für die Datenrate RED DR darauf reagiert, damit der betreffende Kanal mehr Redundanz für eine zuverlässige Übertragung der Nutzdaten zur Verfügung stellen kann. Anschließend wird in einem Sendeschritt SEND S ein weiteres Signal gesendet und ein Aufzeichnungsschritt für die Korrekturrate REC CR durchgeführt. In einem nachfolgenden Abfrageschritt CR<CROLD wird abgefragt, ob sich durch die Reduktion der Datenrate auch die Fehlerrate verkleinert hat. Ist dies der Fall, so wird die Reduktion der Datenrate beibehalten und es wird der nächste Sendeschritt für Signale SEND S durchgeführt. Ist dies nicht der Fall, so wird in einem Zurücksetzungsschritt für die Datenrate DR=DROLD wieder die alte Datenrate gesetzt, da sich die Maßnahme nicht bewährt hat. Alternativ hierzu kann jedoch auch in einem Wechselschritt CHANGE TF die Trägerfrequenz gewechselt werden, sofern eine Trägerfrequenz zur Verfügung steht, die bisher nicht genutzt wurde. Mit den genannten Änderungen wird der nächste Sendeschritt für ein Signal SEND S durchgeführt.

Sollte der Abfrageschritt CR>MAX jedoch negativ ausfallen, wird in einem nächsten Abfrageschritt CR<MIN geprüft, ob die Korrekturrate kleiner als ein unterer Grenzwert ist (der untere Grenzwert liegt betragsmäßig unterhalb des oberen Grenzwertes oder ist mit diesem gleich, d. h. MAX ≥ MIN). Ist dies der Fall, wird in einem Steigerungsschritt RISE DR die Datenrate gesteigert, damit "gute" Trägerfrequenzen besser ausgelastet werden. In einem nachfolgenden Abfrageschritt CR>CROLD wird abgefragt, ob sich hierdurch die Korrekturrate vergrößert hat. Ist dies der Fall, wird in einem Zurücksetzungsschritt DR=DROLD die Datenrate wieder zurückgesetzt, da eine Steigerung der Fehlerkorrektur einen Hinweis darauf liefert, dass die Trägerfrequenz bereits optimal ausgelastet war. Ändert sich die Korrekturrate jedoch nicht, wird mit der neuen Datenrate der nächste Sendeschritt für ein Signal SEND S durchgeführt.

Nach Durchlaufen beider Abfrageschritte für die Korrekturrate wird ein nächster Abfrageschritt NEW INI durchlaufen, bei dem gefragt wird, ob eine erneute Initialisierung erfolgen soll. Dies ist auch während des Verfahrens möglich, wobei hierbei die Datenübertragung für Nutzdaten NTS unterbrochen werden muss. Dies muss durch eine geeignete Führung der Prozesse PROC sichergestellt sein, dahingehend, dass eine Unterbrechung der Datenübertragung keine Sicherheitsrisiken birgt. Insbesondere in der Bahntechnik ist dies von vorrangiger Bedeutung; der Initialisierungsschritt kann zum Beispiel in Betriebspausen durchgeführt werden.

Die Datenübertragung läuft anschließend weiter, wobei mit evtl. geänderten Datenraten DR oder Trägerfrequenzen TF weitergearbeitet wird. Dabei werden im nächsten Zeitraum T, wie bereits erläutert, die Korrekturraten aufgezeichnet und ggf. weiter geändert. Wenn eine Abfrage END TRANS ergibt, dass das Ende der Übertragung (Betriebsende des laufenden Prozesses PROC) erreicht ist, wird das Übertragungsverfahren beendet.

### Bezugszeichenliste

- SW: Stellwerk
- GL: Gleis
- IA: Innenanlage
- AA: Außenanlage
- M1 ... M2: Modem
- TC1 ... TC2: Transceiver
- CP1 ... CP2: Computer
- SE1 ... SE2: Speichereinrichtung
- PL: Stromleitung
- LSG: Lichtsignal
- ZSE: Zugsicherungssystem
- S1 ... S5: Schnittstelle
- s: Signalstärke
- t: Zeit
- S: Signal
- STS: Steuersignal
- NTS: Nutzsignal
- SCS: Synchronisationssignal
- ZSE: Zeitschlitz zum Empfangen
- ZSS: Zeitschlitz zum Senden
- FRM: Rahmen
- SYNC: Synchronisationsschritt
- SER-PAR: Aufteilungsschritt für das Signal
- IDFT: Inverse diskreten Fouriertransformation
- DAC: Digital-Analog-Wandlung
- ADC: Analog-Digital-Wandlung
- FFT: Fouriertransformation
- PAR-SER: Zusammenführungsschritt für das Signal
- PROC: Prozessschritt
- n=n+1: Hochsetzen der Zählvariable
- n=m: Abfrageschritt Rahmenende
- INI: Abfrageschritt Initialisierung
- SEND S: Sendeschritt für ein Signal
- SEND 0: Sendeschritt ohne Signal
- REC PAR: Aufzeichnungsschritt für einen Empfangsparameter
- CALC QNOISE: Bestimmungsschritt für Signal-Rausch-Verhältnis
- NEXT CH: Abfrageschritt: weiter Kanal vorhanden?
- SET AMP: Einstellschritt für Signalverstärkung
- SET MOD: Einstellschritt für Modulation
- REC CR: Aufzeichnungsschritt für Korrekturrate
- t=T: Abfrageschritt für das Ende eines festgelegten Zeitraums
- CR>MAX: Abfrageschritt: Korrekturrate größer als oberer Grenzwert
- CR<MIN: Abfrageschritt: Korrekturrate kleiner als unterer Grenzwert
- RED DR: Reduzierungsschritt für Datenrate
- RISE DR: Steigerungsschritt für Datenrate
- CR>CROLD: Abfrageschritt: Vergrößerung der Korrekturrate
- DR=DROLD: Zurücksetzungsschritt für Datenrate
- CHANGE TF: Wechselschritt für Trägerfrequenz
- NEW INI: Abfrageschritt einer erneuten Initialisierung
- END TRANS: Abfrageschritt Übertragungsende
- DCE: Direkte Kanalschätzung
- ICE: Indirekte Kanalschätzung

## Patentansprüche

1. Datenübertragungsverfahren, bei dem zwischen einem ersten Transceiver (TC1) und einem zweiten Transceiver (TC2) kabelgebunden eine Datenübertragung in beiden Richtungen mit einer Datenrate in derselben Größenordnung erfolgt, wobei
• zur Übertragung von die Daten repräsentierenden Signalen (S) in den beiden Richtungen ein Time Division Duplex Verfahren eingesetzt wird, bei dem dem ersten Transceiver (TC1) und dem zweiten Transceiver (TC2) jeweils Zeitschlitze zum Senden (ZSS) und Zeitschlitze zum Empfangen (ZSE) der Signale zugewiesen werden, so dass dieser jeweils immer entweder nur sendet oder nur empfängt,
• die Zuweisung der Zeitschlitze für den ersten Transceiver (TC1) und den zweiten Transceiver (TC2) derart synchronisiert wird, dass immer jeweils ein Zeitschlitz zum Senden (ZSS) und ein Zeitschlitz zum Empfangen (ZSE) synchron verlaufen,
**dadurch gekennzeichnet,**
**dass**
• zur Modulation der Signale (S) ein OFDM-Verfahren genutzt wird,
• bei dem alle zur Verfügung stehenden Trägerfrequenzen sowohl für die eine Richtung als auch für die andere Richtung der Übertragung genutzt werden, wobei jedem Zeitschlitz für jede verwendete Trägerfrequenz eine Modulationsvorschrift zugeordnet wird.

2. Datenübertragungsverfahren nach Anspruch 1
**dadurch gekennzeichnet,**
**dass** zur Synchronisation in einem Synchronisationsvorgang (SYNC) ein Synchronisationssignal (SCS) von dem ersten Transceiver (TC1) oder dem zweiten Transceiver (TC2) zum jeweils anderen Transceiver übertragen wird.

3. Datenübertragungsverfahren nach Anspruch 2,
**dadurch gekennzeichnet,**
**dass** mehrere Zeitschlitze zwischen aufeinanderfolgenden Synchronisationsvorgängen (SYNC) liegen, wobei die aufeinanderfolgenden Synchronisationsvorgänge einen Rahmen (FRM) bilden.

4. Datenübertragungsverfahren nach Anspruch 2,
**dadurch gekennzeichnet,**
**dass** das Synchronisationssignal (SCS) zur Bestimmung der Signallaufzeit zwischen dem ersten Transceiver (TC1) und dem zweiten Transceiver (TC2) verwendet wird.

5. Datenübertragungsverfahren nach einem der Ansprüche 2 bis 4,
**dadurch gekennzeichnet,**
**dass** bei dem Synchronisationsvorgang (SYNC) nach dem Senden und Empfangen des Synchronisationssignals (SCS) ein Karenzzeitraum durchlaufen wird, bevor jeweils der nächste Zeitschlitz zum Senden (ZSS) und Zeitschlitz zum Empfangen (ZSE) im ersten Transceiver (TC1) und im zweiten Transceiver (TC2) erreicht werden.

6. Datenübertragungsverfahren nach einem der voranstehenden Ansprüche,
**dadurch gekennzeichnet,**
**dass** für das Senden und das Empfangen der Signale (S) im ersten Transceiver (TC1) und im zweiten Transceiver (TC2) derselbe Trägerfrequenzbereich genutzt wird.

7. Datenübertragungsverfahren nach einem der voranstehenden Ansprüche,
**dadurch gekennzeichnet,**
**dass** im ersten Transceiver (TC1) und zweiten Transceiver (TC2) eingegangene Signale (S) abhängig von der übertragungsbedingten Dämpfung des Signals (S) verstärkt werden.

8. Datenübertragungsverfahren nach Anspruch 7,
**dadurch gekennzeichnet,**
**dass** das Maß der Verstärkung bei einer Initialisierung des Datenübertragungsverfahrens festgelegt wird.

9. Modem (M1, M2), aufweisend
• einen Transceiver mit einer ersten Schnittstelle (S1) zur Datenübertragung und
• einen Computer (CP1, CP2), der über eine zweite Schnittstelle (S21, S22) mit dem Transceiver verbunden ist,
**dadurch gekennzeichnet,**
**dass** das Modem (M1, M2) eingerichtet ist, ein Verfahren zur Datenübertragung gemäß einem der voranstehenden Ansprüche durchzuführen.

10. Bahnanlage, aufweisend ein erste Teilanlage (IA) mit einem ersten Modem (M1) und eine zweite Teilanlage (AA) mit einem zweiten Modem (M2), wobei das erste Modem (M1) und das zweite Modem (M2) über eine erste Schnittstelle (S1) miteinander verbunden sind,
**dadurch gekennzeichnet,**
**dass** das erste Modem (M1) und das zweite Modem (M2) jeweils gemäß dem vorstehenden Anspruch ausgeführt sind.

11. Computerprogrammprodukt mit Programmbefehlen zur Durchführung des Verfahrens nach einem der Ansprüche 1 - 8.

12. Bereitstellungsvorrichtung für das Computerprogrammprodukt nach dem letzten voranstehenden Anspruch, wobei die Bereitstellungsvorrichtung das Computerprogrammprodukt speichert und/oder bereitstellt.

## Claims

1. Data transmission method, in which a wired transmission of data between a first transceiver (TC1) and a second transceiver (TC2) takes place in both directions at a data rate in the same order of magnitude, wherein
• a time division duplex method is used for the transmission of signals (S) representing data in both directions, in which method time slots for sending (ZSS) and time slots for receiving (ZSE) the signals are assigned to the first transceiver (TC1) and the second transceiver (TC2) in each case, such that each transceiver is always either only for sending or only for receiving,
• the assignment of time slots for the first transceiver (TC1) and the second transceiver (TC2) is synchronised such that a time slot for sending (ZSS) and a time slot for receiving (ZSE) always run synchronously in each case,
**characterised in that**
• an OFDM method is used for modulating the signals (S),
• in which method all available carrier frequencies are used both for the one transmission direction and for the other transmission direction, wherein a modulation specification is assigned to each time slot for each carrier frequency used.

2. Data transmission method according to claim 1,
**characterised in that**
in a synchronisation procedure (SYNC), for the purposes of synchronisation, a synchronisation signal (SCS) is transmitted from the first transceiver (TC1) or the second transceiver (TC2) to the respective other transceiver.

3. Data transmission method according to claim 2,
**characterised in that**
a number of time slots lie between successive synchronisation procedures (SYNC), wherein the successive synchronisation procedures form a frame (FRM).

4. Data transmission method according to claim 2,
**characterised in that**
the synchronisation signal (SCS) is used to determine the signal transit time between the first transceiver (TC1) and the second transceiver (TC2).

5. Data transmission method according to one of claims 2 to 4,
**characterised in that**
as part of the synchronisation procedure (SYNC) after sending and receiving the synchronisation signal (SCS), a waiting period is run through before the next time slot for sending (ZSS) and the time slot for receiving (ZSE) in the first transceiver (TC1) and in the second transceiver (TC2) in each case are reached.

6. Data transmission method according to one of the preceding claims,
**characterised in that**
the same carrier frequency range is used for sending and receiving the signals (S) in the first transceiver (TC1) and in the second transceiver (TC2).

7. Data transmission method according to one of the preceding claims,
**characterised in that**
signals (S) entering the first transceiver (TC1) and second transceiver (TC2) are amplified depending on the transmission-related damping of the signal (S).

8. Data transmission method according to claim 7,
**characterised in that**
the degree of amplification is specified as part of an initialisation of the data transmission method.

9. Modem (M1, M2), having
• a transceiver with a first interface (S1) for data transmission and
• a computer (CP1, CP2), which is connected to the transceiver via a second interface (S21, S22),
**characterised in that**
the modem (M1, M2) is configured to carry out a method for data transmission according to one of the preceding claims.

10. Railway system, having a first subsystem (IA) with a first modem (M1) and a second subsystem (AA) with a second modem (M2), wherein the first modem (M1) and the second modem (M2) are connected to one another via a first interface (S1),
**characterised in that**
the first modem (M1) and the second modem (M2) are designed in each case according to the preceding claim.

11. Computer program product with program commands for carrying out the method according to one of claims 1 - 8.

12. Provision apparatus for the computer program product according to the last preceding claim, wherein the provision apparatus stores and/or provides the computer program product.

## Revendications

1. Procédé de transmission de données, dans lequel, entre un premier émetteur-récepteur (TC1) et un deuxième émetteur-récepteur (TC2), a lieu, par câble, une transmission de données dans les deux sens, à un débit de données du même ordre de grandeur, dans lequel
• pour la transmission de signaux (S), représentant les données, dans les deux sens, on utilise un procédé time division duplex, dans lequel on affecte au premier émetteur-récepteur (TC1) et au deuxième émetteur-récepteur (TC2) respectivement des créneaux temporels pour l'émission (ZSS) et des créneaux temporels pour la réception (ZSE) des signaux, de manière à ce que celui-ci respectivement toujours ou n'émette ou ne reçoive,
• on synchronise l'affectation des créneaux temporels pour le premier émetteur-récepteur (TC1) et le deuxième émetteur-récepteur (TC2), de manière à ce que toujours un créneau temporel pour l'émission (ZSS) et un créneau temporel pour la réception (ZSE) soient synchrones,
**caractérisé**
**en ce que**
• l'on utilise un procédé OFDM pour la modulation des signaux (S),
• dans lequel on utilise toutes les fréquences porteuses à disposition tant pour un sens que pour l'autre sens de la transmission, dans lequel on affecte, à chaque créneau temporel, une règle de modulation pour chaque fréquence porteuse utilisée.

2. Procédé de transmission de données suivant la revendication 1,
**caractérisé**
**en ce que**, pour la synchronisation dans une opération (SYNC) de synchronisation, on transmet un signal (SCS) de synchronisation du premier émetteur-récepteur (TC1) ou du deuxième émetteur-récepteur (TC2) à respectivement l'autre émetteur-récepteur.

3. Procédé de transmission de données suivant la revendication 2,
**caractérisé**
**en ce que** plusieurs créneaux temporels sont interposés entre des opérations (SYNC) de synchronisation successives, dans lequel les opérations de synchronisation successives forment une trame (FRM).

4. Procédé de transmission de données suivant la revendication 2,
**caractérisé**
**en ce que** l'on utilise le signal (SCS) de synchronisation pour la détermination du temps de parcours du signal entre le premier émetteur-récepteur (TC1) et le deuxième émetteur-récepteur (TC2).

5. Procédé de transmission de données suivant l'une des revendications 2 à 4,
**caractérisé**
**en ce que**, dans l'opération (SYNC) de synchronisation, il s'écoule, après l'émission et la réception du signal (SCS) de synchronisation, un laps de temps de carence avant d'atteindre respectivement le créneau temporel suivant d'émission (ZSS) et le créneau temporel de réception (ZSE) dans le premier émetteur-récepteur (TC1) et dans le deuxième émetteur-récepteur (TC2).

6. Procédé de transmission de données suivant l'une des revendications précédentes,
**caractérisé**
**en ce que** l'on utilise, pour l'émission et la réception des signaux (S) dans le premier émetteur-récepteur (TC1) et dans le deuxième émetteur-récepteur (TC2), la même plage de fréquence porteuse.

7. Procédé de transmission de données suivant l'une des revendications précédentes,
**caractérisé**
**en ce que** l'on amplifie des signaux (S) entrés dans le premier-émetteur (TC1) et dans le deuxième émetteur-récepteur (TC2), en fonction de l'amortissement dû à la transmission du signal (S).

8. Procédé de transmission de données suivant la revendication 7,
**caractérisé**
**en ce que** l'on fixe la mesure de l'amplification, lors d'une initialisation du procédé de transmission de données.

9. Modem (M1, M2), comportant
• un émetteur-récepteur ayant une première interface (S1) de transmission de données, et
• un ordinateur (CP1, CP2), qui est raccordé par une deuxième interface (S21, S22) à l'émetteur-récepteur,
**caractérisé**
**en ce que** le modem (M1, M2) est agencé pour effectuer un procédé de transmission de données suivant l'une des revendications précédentes.

10. Installation de voie, comportant une première installation (IA) partielle ayant un premier modem (M1) et une deuxième installation (AA) partielle ayant un deuxième modem (M2), dans laquelle le premier modem (M1) et le deuxième modem (M2) sont raccordés entre eux par une première interface (S1),
**caractérisée**
**en ce que** le premier modem (M1) et le deuxième modem (M2) sont réalisés respectivement suivant la revendication précédente.

11. Produit de programme d'ordinateur ayant des instructions de programme pour effectuer le procédé suivant l'une des revendications 1 à 8.

12. Dispositif pour disposer d'un produit de programme d'ordinateur suivant la revendication mentionnée en dernier, dans lequel le dispositif met en mémoire et/ou à disposition le produit de programme d'ordinateur.
